(19) Europäisches Patentamt / European Patent Office / Office européen des brevets

(11) **EP 2 471 419 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(51) Int Cl.:
***A47J 27/14*** *(2006.01)*     ***A47J 37/12*** *(2006.01)*

(21) Anmeldenummer: **12002295.9**

(22) Anmeldetag: **27.08.2009**

(54) **Verfahren zur Optimierung eines Ausgießvorgangs eines Tiegelinhalts**

Method for optimising a pouring procedure of the contents of a pan

Procédé d'optimisation d'un procédé de versement du contenu d'un creuset

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**04.07.2012 Patentblatt 2012/27**

(62) Dokumentnummer(n) der früheren Anmeldung(en) nach Art. 76 EPÜ:
**09290652.8 / 2 301 392**

(73) Patentinhaber:
• **FRIMA-T S.A.S.**
  **68271 Wittenheim Cedex (FR)**
• **RATIONAL AG**
  **86899 Landsberg/Lech (DE)**

(72) Erfinder:
• **Wassmuss, Reinhard**
  **79395 Neuenburg am Rhein (DE)**
• **Lingenheil, Markus**
  **79206 Breisach/Oberrimsingen (DE)**
• **Thiébaud, Fabrice**
  **67120 Duttenheim (FR)**
• **Mink, Diana**
  **9463 Oberriet (CH)**

(74) Vertreter: **Weber-Bruls, Dorothée**
**Jones Day**
**Nextower**
**Thurn-und-Taxis-Platz 6**
**60313 Frankfurt am Main (DE)**

(56) Entgegenhaltungen:
**EP-A- 1 488 721    WO-A-2006/037254**
**US-A- 3 744 475**

**Beschreibung**

Die Erfindung betrifft ein Verfahren zum Steuern oder Regeln der Bewegung eines kippbaren Tiegels eines Gargeräts bei einem Ausgießvorgang eines Tiegelinhalts durch Berechnung von Steuerungsdaten für einen Kippvorgang.

Kipper sind als Gargeräte im Stand der Technik gut bekannt. Solche Gargeräte umfassen einen beheizbaren Tiegel, in dem ein Gargut gegart werden kann. Diese Tiegel sind üblicherweise um eine Achse kippbar, so dass der Inhalt des Tiegels durch Kippen aus dem Tiegel ausgeleert werden kann.

Zur Steuerung des Auskippvorgangs sind Antriebseinrichtungen bekannt, mit denen sich das Kippen des Tiegels um die Achse erreichen lässt. Ebenso ist es für solche Gargeräte bekannt, den Füllstand des Tiegelinhalts im Tiegel direkt in dem Medium, mit dem im Tiegel gegart werden soll, zu messen. Dazu können Thermoelemente und punktuelle kapazitive Füllstandsmesseinrichtungen zum Einsatz kommen. Zudem können Kipper mit Einrichtungen für Kraftmessungen oder Momentenmessungen ausgestattet sein, mit denen das Gewicht des mit Gargut und/oder Garmedium gefüllten Tiegels bestimmt werden kann.

Die US 3,744,475 offenbart eine Kipppfanne, deren Ausgußschnauze seitlich an dem vorderen Rand zur Verbesserung der Hantierbarkeit angeordnet ist.

Ferner ist ein gattungsgemäßes Verfahren zum Steuern oder Regeln einer Bewegung zum Ausgiessen eines liquiden Inhalts aus einem Tiegel eines Gargeräts aus der EP 1 488 721 A1 bekannt, wobei zum Ausgiessen des liquiden Inhalts der Tiegel mittels zumindest einer Antriebseinrichtung aus einer ersten Winkelstellung um einen Kippwinkel $\alpha$ in eine zweite Winkelstellung gekippt wird und die erste und die zweite Winkelstellung von zumindest einer Regel- und/ oder Steuerungseinrichtung des Gargeräts eingestellt wird. Das Gargerät weist dabei einen Tiegel in Form eines wannenartigen Behälters auf, der zum Aufnehmen und Zubereiten von Speisen geeignet ist. Der Behälter des Gargeräts ist um eine Schwenkachse kippbar gelagert und weist einen Ausgussschnabel auf, durch den beim Kippen des Behälters der Tiegelinhalt in Form von Flüssigkeiten oder stückigem Gargut ausgegossen werden kann.

Obwohl sich das bekannte Verfahren grundsätzlich bewährt hat, hat sich gezeigt, dass beim Kippen des Behälters Wellenbewegungen des Tiegelinhalts entstehen können, so dass es zu einem Überschwappen des Garguts oder des Garmediums über einen Rand des Behälters kommen kann. So wird die vorhandene Antriebseinrichtung durch den Benutzer derartig eingesetzt, dass ein manuelles Kippen dadurch erfolgt, dass die Antriebseinrichtung durch Betätigung einer Taste ein- bzw. ausgeschaltet wird. Durch entsprechende Taktung der Tastenbetätigung wird der Tiegel dann für den Ausgiessvorgang gekippt. Solche Bewegungen führen jedoch zu einem unstetigen Ausgiessverhalten, wodurch ein stufenloses Ausgiessen unterschiedlicher Produkte bei verschiedenen Füllständen aus unterschiedlichen Behältergrössen nur schwer möglich ist, insbesondere eine grosse Erfahrung des Bedieners des Gargeräts bedarf. Durch das Überschwappen von Gargut oder Garmedium kann es nicht nur zu einem ungewollten Verlust des Garguts oder des Garmediums kommen, sondern es besteht auch das Risiko, dass sich der Bediener des Gargeräts am heissen Tiegelinhalt verletzt.

Aufgabe der vorliegenden Erfindung ist es, das gattungsgemäße Verfahren derart weiterzuentwickeln, dass ein gezieltes, möglichst stufenloses, und gleichzeitig gleichmässiges Ausgiessen unterschiedlicher Produkte und bei verschiedenen Füllständen aus unterschiedlichen Tiegelgrössen ermöglicht wird. Darüber hinaus soll das Kippen der Behälter unter Beachtung geltender Arbeitssicherheitsvorschriften optimal schnell und bedienerfreundlich gestaltet werden, insbesondere vollautomatisch erfolgen, so dass auch ein unerfahrener Bediener hocheffektiv und sicher mit dem Gargerät arbeiten kann.

Diese Aufgabe wird durch ein Verfahren nach Anspruch 1 gelöst.

Bevorzugte erfindungsgemäße Verfahren sind in den Ansprüchen 2 bis 6 beschrieben.

Ein Verfahren zum Steuern oder Regeln einer Bewegung zum Ausgießen eines liquiden Inhalts aus einem Tiegel eines Gargeräts ist vorteilhaft, bei dem zum Ausgießen des liquiden Inhalts der Tiegel mittels zumindest einer Antriebseinrichtung aus einer ersten Winkelstellung ($\alpha_w$) um einen Kippwinkel $\alpha$ in eine zweite Winkelstellung ($\alpha_w$) gekippt wird und die erste und die zweite Winkelstellung von zumindest einer Regel- und/oder Steuerungseinrichtung des Gargeräts eingestellt wird, wobei das Bestimmen des Kippwinkels $\alpha$, zumindest einer ersten Ableitung des Kippwinkels $\alpha$ und/oder zumindest einer zweiten Ableitung des Kippwinkels $\alpha$ basierend auf zumindest einer geometrischen Abmessung des Tiegels vorgesehen ist.

Weiterhin kann es vorteilhaft sein, dass das Verfahren auch das Regeln und/oder Steuern des Kippens von der ersten Winkelstellung in die zweite Winkelstellung mittels der Regel-und/oder Steuereinrichtung basierend auf dem bestimmten Kippwinkel $\alpha$, der ersten Ableitung und/oder der zweiten Ableitung umfasst, vorzugsweise mittels der Regel- und/oder Steuereinrichtung, als die erste Ableitung der Kippwinkel $\alpha$ nach der Zeit abgeleitet wird, insbesondere als die erste Ableitung eine Winkelgeschwindigkeit $\omega$ des Kippwinkels $\alpha$ bestimmt wird, und/oder als die zweite Ableitung der Kippwinkel $\alpha$ zweifach nach der Zeit abgeleitet wird, insbesondere als die zweite Ableitung eine Winkelbeschleunigung $\psi$ des Kippwinkels $\alpha$ bestimmt wird, und/oder der liquide Inhalt über zumindest einen Ausguss des Tiegels ausgegossen, insbesondere durch den Ausguss kanalisiert und/oder geleitet wird.

Auch kann vorgesehen sein, dass bei dem Bestimmen der geometrischen Abmessung des Tiegels zumindest eine Breite, eine Höhe, eine Tiefe, ein Neigungswinkel, insbesondere zumindest einer Wand, eine Querschnittsform, eine Umfangsform, zumindest eine Grösse und/oder Neigung einer Bodenfläche, zumindest eine Umfangslänge, zumindest ein Fassungsvolumen und/oder zumindest eine Normgrösse des Ausgusses und/oder des Tiegels verwendet und/oder bestimmt wird bzw. werden.

Weiterhin ist es vorteilhaft, dass die erste Winkelstellung, die zweite Winkelstellung, der Kippwinkel $\alpha$, die erste Ableitung des Kippwinkels $\alpha$ und/oder die zweite Ableitung des Kippwinkels $\alpha$ basierend auf zumindest einem Füllstand des liquiden Inhalts in dem Tiegel und/oder zumindest einer Dichte und/oder Viskosität des liquiden Inhalts des Tiegels bestimmt wird, wobei vorzugsweise der Füllstand mittels zumindest eines, insbesondere mit zumindest einer Wand des Tiegels in Wirkverbindung stehenden, ersten Sensors gemessen wird, vorzugsweise der Füllstand kontinuierlich und/oder unter Einsatz elektromagnetischer, optischer und/oder akustischer Strahlung, wie Ultraschallstrahlung, Infrotstrahlung, Radarstrahlung, Mikrowellenstrahlung, Laserstrahlung und/oder Lichtstrahlung und/oder mittels zumindest eines Thermoelementes, vorzugsweise, insbesondere mittels eines Zeitgebers in Abhängigkeit von einem zeitlichen Verlauf eines Temperatursignals des Thermoelements, kapazitiv und/oder mittels einer Vielzahl von ersten Sensoren gemessen wird.

Besonders bevorzugt ist, dass die erste Winkelstellung, die zweite Winkelstellung, der Kippwinkel $\alpha$, die erste Ableitung des Kippwinkels $\alpha$ und/oder die zweite Ableitung des Kippwinkels $\alpha$ basierend auf einer ersten Masse des Tiegels und/oder einer zweiten Masse des liquiden Inhalts bestimmt wird, wobei vorzugsweise die erste Masse und/oder die zweite Masse kontinuierlich und/oder in zumindest einer Arbeitsposition, die insbesondere durch eine Winkelstellung von 0° definiert ist, und/oder mittels zumindest eines zweiten Sensors, insbesondere umfassend zumindest einen, vorzugsweise mit der Antriebseinrichtung und/oder dem Tiegel in Wirkverbindung stehenden, Kraftsensor, einen Drehmomentsensor, einen Momentsensor und/oder einen Dehnungsmessstreifen, vorzugsweise mit zumindest einer Kraftmessdose, bestimmt wird.

Auch kann ein Verfahren sich dadurch auszeichnen, dass die geometrische Abmessung, eine Art des liquiden Inhalts, die Viskosität und/oder die Dichte, der Füllstand, die erste Masse und/oder die zweite Masse basierend auf einer Auswahl und/oder Bestimmung einer Betriebsart des Gargeräts, eines Reinigungsprogramms, eines Garprogramms, eines Garprozesses, einer Gargutart und/oder einer Art eines Garmediums und/oder Reinigungsmediums, basierend auf einem durch das Gargerät, insbesondere die Regel- und/oder Steuereinrichtung, gesteuerten Befüllen des Tiegels mit einem Gar- oder Reinigungsmedium und/oder basierend auf einer von einem Benutzer des Gargeräts vorgenommenen Vorgabe bestimmt wird bzw. werden und/oder basierend auf zumindest einer Einstellung des Benutzers mittels einer, insbesondere eine Benutzeroberfläche darbietende, Eingabeeinrichtung des Gargeräts bestimmt wird, wobei vorzugsweise zur Bestimmung der geometrischen Abmessung, der Art des liquiden Inhalts, der Viskosität und/oder der Dichte, des Füllstands, der ersten Masse und/oder der zweiten Masse eine Vielzahl von Betriebsarten des Gargeräts, von Tiegelnormgrössen, von Tiegelgrössen, von Tiegelvolumina, von Reinigungsprogrammen, von Garprogrammen, von Garprozessen, von Gargutartarten und/oder Arten des Garmediums und/oder Reinigungsmediums, insbesondere Gargutartarten und/oder Arten des Garmediums und/oder Reinigungsmediums mit vergleichbaren Dichten und/oder Viskositäten, in Gruppen zusammengefasst und/oder geclustert werden.

Zudem kann vorgesehen sein, dass die Dichte des liquiden Inhalts, insbesondere mittels der Regel- und/oder Steuereinrichtung, aus der Füllstandhöhe und/oder einem, insbesondere mittels der geometrischen Abmessung und/oder der Füllstandshöhe bestimmten, Volumen des liquiden Inhalts und der ersten Masse bestimmt wird und/oder die Viskosität und/oder zumindest eine weitere Eigenschaften des liquiden Inhalts durch eine Frequenz, eine Amplitude und/oder ein Abklingverhalten einer Masseschwingung des liquiden Inhalts, insbesondere resultierend aus und/oder zeitlich nach einer vordefinierten Winkelbeschleunigung $\psi d$ bestimmt wird.

Auch ist bevorzugt, dass, vorzugsweise mittels der Regel- und/oder Steuereinrichtung, die erste Ableitung, die zweite Ableitung umgekehrt proportional, reziprok proportional, antiproportional und/oder indirekt proportional dem Füllstand, der ersten Masse, der Dichte und/oder der Viskosität bestimmt wird, bei der Bestimmung der ersten Winkelstellung, der zweiten Winkelstellung, des Kippwinkels $\alpha$, der ersten Ableitung und/oder der zweiten Ableitung bestehende Arbeitssicherheitsnormen berücksichtigt werden, die erste Winkelstellung, die zweite Winkelstellung, der Kippwinkel $\alpha$, die erste Ableitung und/oder die zweite Ableitung stufenlos eingestellt wird bzw. werden und/oder die erste Winkelstellung, die zweite Winkelstellung, der Kippwinkel $\alpha$, die erste Ableitung und/oder die zweite Ableitung, insbesondere kontinuierlich und/oder mittels zumindest eines dritten Sensors, gemessen wird.

Dass zum Bestimmen der ersten Winkelstellung, der zweiten Winkelstellung, des Kippwinkels $\alpha$, der ersten Ableitung des Kippwinkels $\alpha$ und/oder der zweiten Ableitung des Kippwinkels $\alpha$ in zumindest einer Tabelle und/oder in einem Speicher des Gargeräts hinterlegte, vorzugsweise zuvor empirisch bestimmte, Werte verwendet werden und/oder mathematische Verfahren verwendet werden, ist vorteilhaft.

Ferner kann vorgesehen sein, dass zum Bestimmen der zweiten Winkelstellung, des Kippwinkels $\alpha$, der ersten Ableitung des Kippwinkels $\alpha$ und/oder der zweiten Ableitung des Kippwinkels $\alpha$ ein Ausgusswinkel $\alpha_A$, insbesondere eine zweite Winkelstellung, bei dem bei einer Veränderung einer Winkelposition des Tiegels, vorzugsweise einer Veränderung aus der Arbeitsposition, der liquide Inhalt beginnt aus dem Tiegel, insbesondere über den Ausguss, auszutreten, bestimmt wird, ein kritischer Drehwinkel $\alpha_d$ des Tiegels 1' bestimmt wird, bei dem sich insbesondere ein Bedeckungsgrad eines Tiegelbodens mit dem liquiden Inhalt reduziert, bestimmt wird und/oder der Kippwinkel $\alpha$, die erste Ableitung des Kippwinkels $\alpha$ und/oder die zweite Ableitung des Kippwinkels $\alpha$ basierend auf der ersten Winkelstellung und/oder zweiten Winkelstellung bestimmt wird bzw. werden, insbesondere ein maximal erlaubter Wert der ersten Ableitung reduziert wird, wenn die zweite Winkelstellung grösser als ein, insbesondere in Abhängigkeit von einer maximalen zweiten Winkelstellung, bestimmter, vorgegebener Wert ist und/oder ein Differenz zwischen der ersten Winkelstellung und dem Ausgusswinkel geringer als ein vorgegebener Wert ist.

Bei der vorgenannten Ausführungsform ist besonders bevorzugt, dass der Kippwinkels $\alpha$, die erste Ableitung des Kippwinkels $\alpha$ und/oder die zweite Ableitung des Kippwinkels $\alpha$ in einem Winkelbereich zwischen der Arbeitsposition und dem Ausgusswinkel und/oder dem kritischen Drehwinkel im Wesentlichen unabhängig von einem vorgegebenen Wert für ein Ausgussvolumen und/oder eine Ausgussgeschwindigkeit des liquiden Inhalts aus dem Tiegel bestimmt wird, insbesondere im wesentlichen ausschliesslich basierend auf der Dichte, der Viskosität, dem Füllstand, der ersten Masse und/oder der zweiten Masse, und/oder die erste Ableitung des Kippwinkels $\alpha$ vor Erreichen des kritischen Drehwinkels $\alpha d$ reduziert wird, vorzugsweise um eine Wellenbewegung und/oder ein Austreten des liquiden Inhalts, insbesondere im Bereich des Ausgusses und/oder ausserhalb des Ausgusses, zu vermeiden.

Insbesondere für die beiden vorgenannten Ausführungsformen wird vorgeschlagen, dass der Kippwinkel $\alpha$, die erste Ableitung des Kippwinkels $\alpha$ und/oder die zweite Ableitung des Kippwinkels $\alpha$ in einem Winkelbereich zwischen dem Ausgusswinkel und der maximalen zweiten Winkelstellung zumindest zusätzlich in Abhängigkeit von einem vorgegebenen Wert für ein Ausgussvolumen und/oder eine Ausgussgeschwindigkeit des liquiden Inhalts aus dem Tiegel bestimmt wird, insbesondere um einen kontinuierlichen Ausfluss des maximal möglichen Volumens des liquiden Inhalts in einer minimalen Zeitspanne zu erreichen.

Auch kann vorgesehen sein, dass die zweite Winkelstellung in Abhängigkeit von einem Volumen des liquiden Inhalts des Tiegels, der aus dem Tiegel ausgegossen werden soll, bestimmt wird, insbesondere ein Kippbewegung des Tiegels bei Erreichen der zweiten Winkelstellung gestoppt und/oder reversiert wird, insbesondere durch Reduzierung der ersten Ableitung von einem positiven Wert auf Null oder einen negativen Wert, wobei vorzugsweise nach Erreichen der zweiten Winkelstellung der Ausgusswinkel erneut bestimmt wird und/oder die Kippbewegung, insbesondere durch Bestimmung einer neuen zweiten Winkelstellung, in Abhängigkeit von dem Volumen des liquiden Inhalts des Tiegels, der aus dem Tiegel ausgegossen werden soll, mit einer positiven ersten Ableitung fortgeführt wird.

Ein Gargerät, umfassend zumindest einen mit einem liquiden Inhalt befüllbaren Tiegel, zumindest einer Antriebseinrichtung mittels der der Tiegel um eine erste Achse kippbar ist und einer mit der Antriebseinrichtung in Wirkverbindung stehende Regel- und/oder Steuereinrichtung, ist geeignet zur Durchführung eines erfindungsgemässen Verfahrens.

Der Tiegel kann dabei zumindest einen Ausguss umfassen, das Gargerät kann in Form eines Kippers ausgebildet sein und/oder das Gargerät kann ferner, insbesondere mit der Regel-und/oder Steuereinrichtung in Wirkverbindung stehend, zumindest einen ersten Sensor, zumindest einen zweiten Sensor, zumindest einen dritten Sensor, zumindest einen Zeitgeber, zumindest eine Eingabeeinrichtung, vorzugsweise umfassend zumindest einen Touchscreen und/oder zur Durchführung einer Eingabe und/oder zur Eingabe einer Vorgabe durch einen Benutzer, und/oder zumindest einen Speicher umfasst.

Die überraschende Erkenntnis der Erfindung ist darin zu sehen, dass es bei Berücksichtigung der Tiegelgeometrie möglich ist, die Bewegungen des Tiegels derart zu steuern, dass einerseits ein Überschwappen aus dem Tiegel verhindert wird und, wenn diese gewünscht ist, ein nahezu konstanter Volumenstrom eines liquiden Inhalts des Tiegels bzw. eines Tiegelinhalts aus dem Tiegel, insbesondere über einen Ausguss des Tiegels, erfolgen kann, und andererseits die Bewegungen des Tiegels dennoch möglichst schnell erfolgen können. Dabei fließt zusätzlich eine Füllstandshöhe des Tiegelinhalts und/oder eine Dichte, Konsistenz und/oder Viskosität des liquiden Inhalts des Tiegels bzw. Tiegelinhalts, also eine Tiegelinhaltsfließeigenschaft in das Verfahren neben der Tiegelgeometrie ein. Ferner kann erreicht werden, dass ein Volumenstrom aus dem Tiegel kontinuierlich bis zu einem maximalen Wert ansteigt. Die Idee der Erfindung ist also bereits in der Erkenntnis zu sehen, dass eine Optimierung des Ausgiessvorgangs eines Tiegels dadurch erreicht wird, dass als Parameter eine Tiegelgeometrie, vorzugsweise unter Heranziehung einer Fliesseigenschaft des Tiegelinhalts, wie der Dichte, der Konsistenz und/oder der Viskosität, und/oder einem Füllstand, bei der Berechnung von Steuerungsdaten für den Kippvorgang des Tiegels berücksichtigt werden. Die Form eines Ausgusses kann auch berücksichtigt werden. Insbesondere kann ein sicheres Ausgiessen eines Tiegelinhalts bei grösstmöglichen Volumenfluss und damit in einer kürzmöglichsten Zeitspanne ohne Beeinträchtigung der Arbeitssicherheit erreicht werden.

Bei den bevorzugten Ausführungsformen der Erfindung wird ferner ausgenutzt, dass neben der Geometrie des Tiegels auch die zuvor angeführten Eigenschaften des Tiegelinhalts und auch die Form des Ausgusses, der Füllstand im Tiegel sowie die Masse des Tiegelinhalts Einfluss darauf haben, wie sich der Tiegelinhalt bei einer Bewegung des Tiegels verhält. Diese Grössen sind für die Steuerung des Kippvorgangs des Tiegels demzufolge ebenfalls von Interesse, da beispielsweise durch die Ausgussgeometrie das Leiten bzw. Kanalisieren des Tiegelinhalts bzw. liquiden Inhalts aus dem Tiegel wesentlich beeinflusst wird. Daher kann es für die vorliegende Erfindung vorteilhaft sein, eine oder mehrere dieser Grössen mit Hilfe von Sensoren oder durch andere Mittel zu bestimmen, und bei der Berechnung von Steuerungsdaten für die Bewegung des Tiegels zu berücksichtigen. Eine Bestimmung der Geometrie des Tiegels wird vorzugsweise dadurch vorgenommen, dass in einer Datentabelle Abmasse des Tiegels hinterlegt und bei Bedarf, insbesondere in Abhängigkeit von dem verwendeten Tiegel und/oder dessen Normmassen, abgerufen werden. Auch kann ein Benutzer die Abmessungen erfassen und eingeben, es ist jedoch die Hinterlegung der Werte in Tabellen bevorzugt.

Werden die Parameter des Tiegelinhalts nicht durch eine geeignete Sensorik bestimmt, so kann von einer typischen Konsistenz des Tiegelinhalts ausgegangen werden. Häufig kann davon ausgegangen werden, dass es sich bei dem Tiegelinhalt entweder um ein wässriges Gargut handelt, d. h. das Gargut im Wesentlichen flüssig ist und nur einige wenige feste Bestandteile aufweist oder von einer öligen, zählflüssigen Konsistenz des Garmediums und damit auch des Tiegelinhalts ausgegangen werden.

Auf die Art des Tiegelinhalts kann auch dadurch zurückgeschlossen werden, dass die Eingaben eines Anwenders an einer Eingabeeinrichtung des Gargeräts berücksichtigt werden. So kann beispielsweise von einer wässrigen Konsistenz des Tiegelinhalts ausgegangen werden, wenn ein Garprogramm "Nudeln kochen" angewählt wurde. Bei der Anwahl eines Garprogramms "Pudding kochen" muss hingegen von einer zäheren Konsistenz des Tiegelinhalts ausgegangen werden. Insbesondere wenn das Gargerät den Inhalt des Tiegels selbst auffüllt, indem es beispielsweise Wasser in den Tiegel einführt, ist von einem bekannten Tiegelinhalt auszugehen.

Solche Informationen über die Eingaben des Anwenders und/oder die Steuerung des Gargeräts werden vorzugsweise gemeinsam mit den Daten der Sensoren ausgewertet. So ist es beispielsweise möglich, das Gewicht des Tiegelinhalts mit Hilfe zumindest eines Kraftsensors, der mit dem Tiegel in Wirkverbindung steht, zu messen und daraus die Masse des Tiegelinhalts zu berechnen. Wird gleichzeitig ein Garprogramm, beispielsweise für Gulasch, gewählt und im Laufe des Garprogramms über einen Wasseranschluss des Gargeräts Wasser in den Tiegel gefüllt, so kann daraus die Konsistenz, insbesondere Dichte und/oder Viskosität, des Tiegelinhalts abgeschätzt werden.

Ebenso ist es möglich, den Temperaturanstieg des Tiegelinhalts beim Erwärmen desselben dahingehend auszuwerten, dass bei einem langsamen Temperaturanstieg von einer grossen thermischen Last ausgegangen werden kann, während ein schneller Temperaturanstieg des Tiegelinhalts auf eine kleine thermische Last schliessen lässt. Befinden sich im Tiegel vornehmlich wässrige Substanzen, so kann bei bekanntem Wirkungsgrad und bekannter Leistung der Heizelement des Tiegels sowie bei bekannter Wärmekapazität von Wasser direkt auf die Masse des Tiegelinhalts rückgeschlossen werden.

Der Tiegel des Gargeräts kann durch kontinuierliche Beschleunigungs- und Geschwindigkeitsprofile oder durch verschiedene abgestimmte Beschleunigungs- und Geschwindigkeitsstufen schnell oder weniger schnell über eine Regelung intelligent bewegt bzw. gekippt werden. Dadurch kann ein entsprechend dem Garmedium und gegebenenfalls anderer Parameter, wie dem Füllstand, geeignetes Entleeren des Tiegels ohne Wellenbewegungen und ohne ein Überschwappen der Produkte über die Ausgussgeometrie hinaus realisiert werden. Dazu muss die Antriebseinrichtung, mit dem der Tiegel von einer ersten Winkelstellung um einen Kippwinkel in eine zweite Winkelstellung gekippt wird, d. h. um eine Achse gedreht wird, geregelt werden bzw. regelbar sein.

Zudem können bei der Bewegung des Tiegels, also beispielsweise beim Kippen des Tiegels zwecks Entleerung desselben mit maximalen Beschleunigungen und Geschwindigkeiten, problemlos Arbeitssicherheitsnormen in die Steuerung der Tiegelposition einfliessen und so die Arbeitssicherheit erhöht werden und so gleichzeitig eine grösstmögliche Arbeitseffizienz und Bedienfreundlichkeit erreicht werden.

Unter einer Winkelstellung ist im Sinne der vorliegenden Erfindung die Vorgabe einer bestimmten Kippwinkelposition zu verstehen, aus der oder in die der Tiegel durch einen Kippenwinkel $\alpha$ verfahren wird, wobei gleichzeitig eine Winkelgeschwindigkeit $\omega$ des Kippwinkels $\alpha$ und/oder eine Winkelbeschleunigung $\psi$ des Kippwinkels $\alpha$ und/oder ein zeitlicher Verlauf derselben vorgegeben wird, um zu einer zweiten Winkelstellung zu gelangen. Eine Winkelstellungsveränderung im Sinne der Erfindung umfasst also die Vorgabe eines Kippwinkels $\alpha$ sowie die Vorgabe einer Winkelgeschwindigkeit $\omega$ und/oder einer Winkelbeschleunigung $\psi$ zur Steuerung der Bewegung des Tiegels.

Der Füllstand des Tiegelinhalts kann mit kontinuierlichen Messverfahren bzw. Messmethoden bestimmt werden. Beispiele hierfür sind Ultraschallsensoren, Radarsensoren, Lasermessungen und kapazitive Messungen, die direkt im Tiegelinhalt messen. Anstatt eines kontinuierlichen Messverfahrens können die Messungen auch in zeitlich diskreten Schritten erfolgen. Die Anzahl der Schritte kann dabei auch sehr klein sein, so dass im Extremfall sogar eine einzige Messungen ausreichend sein kann.

Zur Messung des Füllstands bzw. der Füllhöhe des liquiden Inhalts bzw. Tiegelinhalts kann auch eine Vielzahl von Thermoelementen eingesetzt werden, die senkrecht an der Tiegelwand angebracht sind. Durch das Erwärmen des Tiegelinhalts haben diejenigen Thermoelemente, die unterhalb des Oberfläche des Tiegelinhalts liegen, eine andere, insbesondere höhere Temperatur als die ausserhalb des Tiegelinhalts liegenden Thermoelemente. Solche Thermoelemente liefern zum Einen anhand der einzelnen Temperaturen und anhand eines interpolierbaren Temperaturverlaufs Informationen zum Füllstand, zum Anderen können diese Informationen über die Temperaturen und den Temperaturverlauf auch intelligent für automatische Garprogramme genutzt werden.

Bei einer manuellen Wahl einer Betriebsart oder durch die Anwahl eines Garprogramms oder Reinigungsprogramms werden ebenfalls wichtige Informationen über das Garverfahren und das Garmedium, bzw. das Reinigungsmedium sowie das Gargut und damit über den Tiegelinhalt geliefert. Auch diese Informationen können dazu genutzt werden, die Bewegung des Tiegels intelligent zu steuern.

Der Volumenstrom des Tiegelinhalts aus dem Tiegel wird berechnet aufgrund der Tiegelgeometrie und dem Kippwinkel des Tiegels. Durch die Steuerung oder Regelung des zeitabhängigen Verhaltens des Kippwinkels, ist der Volumenstrom des Tiegelinhalts aus dem Tiegel steuerbar. Hierzu kann jede Zeitabhängigkeit des Kippwinkels des Tiegels genutzt werden. Dazu sind beispielsweise alle zeitlichen Ableitungen des Kippwinkels geeignet. Insbesondere die Winkelgeschwindigkeit, die Winkelbeschleunigung und/oder die zeitliche Änderung der Winkelbeschleunigung des Kippwinkels sind zur Steuerung oder Regelung des Volumenstroms aus dem Tiegel geeignet.

Der Volumenstrom, der durch das aus dem Tiegel austretende Volumen des Tiegelinhalts pro Zeiteinheit definiert ist, kann gemessen und/oder berechnet werden. Zusätzlich oder alternativ dazu kann der Volumenstrom auch empirisch für definierte Bewegungen des Tiegels bestimmt werden. Die Werte für den Volumenstrom sind dann in einem Speicher des Gargeräts hinterlegt, insbesondere in Abhängigkeit von jeweiligen Winkelstellungen. Jedem Volumenstrom ist dazu eine Winkelgeschwindigkeit und/oder Winkelbeschleunigung und ein Kippwinkel zugeordnet. Der Volumenstrom wird dabei in Abhängigkeit von der Konsistenz des Tiegelinhalts bestimmt und demzufolge sind auch hierzu Daten im Speicher hinterlegt. Dort sind dann verschiedene Tabellen für verschiedene Konsistenzen des Tiegelinhalts hinterlegt oder es werden ein oder mehrere Korrekturparameter hinterlegt mit denen der Volumenfluss in Abhängigkeit von der Dichte und/oder Konsistenz rechnerisch korrigiert wird. Die empirische Bestimmung des Volumenflusses bietet sich vor allem bei komplizierten Tiegelgeometrien an, bei denen der Volumenfluss nicht leicht berechnet werden kann.

Bestimmte Garmedien können anhand ihrer Dichte geclustert werden, d. h. verschiedene Dichten unterschiedlicher Garmedien bzw. Tiegelinhalte können logisch zusammengefasst werden. So wird beispielsweise ein Tiegel, der mit Wasser und Nudeln gefüllt ist, sich praktisch identisch zu einem Tiegelinhalt einer dünnen Suppe verhalten. Dementsprechend können solche Tiegelinhalte zu einem typischen Tiegelinhalt zusammengefasst und dadurch geclustert werden. Die Regelung der Tiegelbewegung richtet sich dann nach den typisierten Tiegelinhalten.

Eine Kombination der Messung des Füllstands bzw. der Füllstandshöhe mit einer Masseerkennung des Tiegelinhalts ermöglicht es, die durchschnittliche Dichte des Tiegelinhalts auf einfache Weise zu bestimmen, um die erfindungsgemässe Ausguss- bzw. Tiegelbewegungssteuerung bzw. -regelung zu erreichen. Eine Massenerkennung ist beispielsweise mit einem Kraft-/Momentensensor oder direkt über Dehnungsmessstreifen durchführbar. Bei einer Anwendung einer oder mehrerer Kraftmessdosen werden diese dazu an Auflagepunkten angebracht, an denen sich der Tiegel abstützt.

Durch all diese Massnahmen wird dem Anwender bzw. Benutzer eines Gargeräts, insbesondere Kippers, nach einer Garanwendung oder einem Reinigungsvorgang das Entleeren des Tiegels erleichtert. Die Probleme, die besonders bei grossen Mengen an Tiegelinhalt und/oder dickflüssigem Tiegelinhalt, beispielsweise durch Ausbildung von Wellenbewegung oder einem Überschwappen des Tiegelinhalts, bisher auftraten, sind bei Verwendung des vorgegebenen Verfahrens kein Problem mehr. Insbesondere wird der Benutzer des Gargeräts durch das erfindungsgemässe Verfahren entlastet, da ein Entleeren des Tiegels erstmalig vollautomatisch erfolgen kann, ohne dass es einer Überwachung dieses Vorganges durch den Benutzer bedarf und gleichzeitig die Arbeitseffizienz weiter dadurch gesteigert, dass immer der grösstmögliche Volumenstrom aus dem Tiegel eingestellt und so ein für jeden Tiegelinhalt eine effiziente vollautomatische Entleerung sichergestellt werden kann, insbesondere kleine Mengen schnell entleert werden können.

Weitere Merkmale und Vorteile der Erfindung ergeben sich aus der nachfolgenden Beschreibung, in der Ausführungsbeispiele erfindungsgemässer Verfahren und Gargeräte anhand schematischer Zeichnungen und anhand von Diagrammen beispielhaft erläutert werden. Dabei zeigt:

Figur 1 : eine perspektivische, schematische Darstellung eines Gargeräts für ein erfindungsgemässes Verfahren von schräg unten;

Figur 2 : eine andere perspektivische, schematische Darstellung des Gargeräts nach Figur 1 von schräg oben;

Figur 3 : eine perspektivische, schematische Darstellung eines gefüllten Tiegels zur Erläuterung eines erfindungsgemässen Verfahrens;

Figur 4 : eine schematische Schnittansicht eines gekippten Tiegels zur Erläuterung eines erfindungsgemässen Verfahrens;

Figur 5 : eine schematische Schnittansicht eines stärker gekippten Tiegels zur Erläuterung eines erfindungsgemässen Verfahrens;

Figur 6 :  ein Diagramm der Winkelgeschwindigkeit ψ in Abhängigkeit von der Winkelstellung für ein erfindungsgemässes Verfahren;

Figur 7 :  ein anderes Diagramm der Winkelgeschwindigkeit ω in Abhängigkeit von der Winkelstellung für ein erfindungsgemässes Verfahren; und

Figur 8 :  ein Diagramm der Winkelstellung in Abhängigkeit von der Zeit t für ein erfindungsgemässes Verfahren.

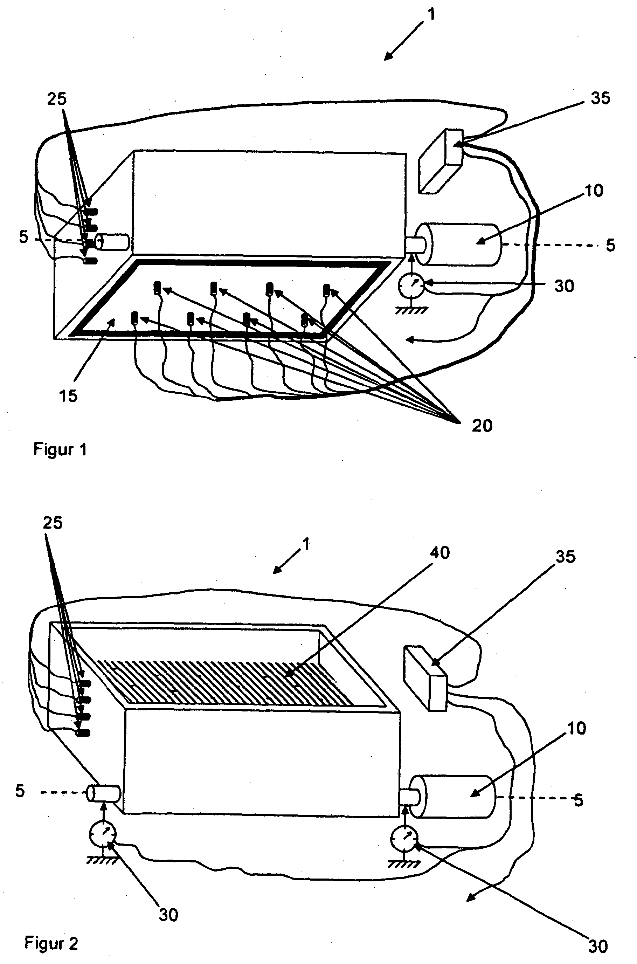

Figur 1 zeigt einen Tiegel 1 für ein Gargerät, das für die Durchführung eines erfindungsgemässen Verfahrens eingerichtet ist. Der Tiegel weist vorbestimmte und in Datentabellen hinterlegte geometrische Abmessungen auf und lässt sich um eine Drehachse 5 kippen. Zum Kippen des Tiegels 1 ist eine Antriebseinrichtung in Form eines Motors 10 vorgesehen. Auf dem Tiegelboden 15 sind acht Thermoelemente 20 angebracht, mit denen die Temperaturverteilung am Tiegelboden 15 messbar ist.

Mit einer (Seiten-)Wand des Tiegels 1 stehen fünf erste Sensoren 25 zur Bestimmung eines Füllstands eines liquiden Inhalts des Tiegels bzw. eines Tiegelinhaltes in Wirkverbindung, sind insbesondere an der Wand angebracht. Bei diesen Sensoren 25 kann es sich beispielsweise um kapazitive Sensoren aber auch um Thermoelemente handeln.

Mit den Punkten der Drehachse 5, an denen der Tiegel 1 gelagert ist, stehen zweite Sensoren in Form von Masseerkennungssensoren 30 (nur der rechte Masseerkennungssensor 30 ist in Figur 1 gezeigt) in Wirkverbindung, mit denen eine erste Masse in Form des Gewichts des Tiegels 1 und eine zweite Masse in Form des Gewichts des Tiegelinhalts bestimmt werden können. Die Thermoelemente 20, die Füllstandssensoren 25 und die Masseerkennungssensoren 30 sind mit einer Regel- und/oder Steuereinrichtung in Form einer Steuerungseinrichtung 35 verbunden, insbesondere an diese angeschlossen. Die Steuerungseinrichtung 35 übernimmt auch die Steuerung des Motors 10. Als Masseerkennungssensoren 30 kommen neben einfachen Waagen zur Bestimmung der Gewichtskraft des Tiegels 1 mit dem Tiegelinhalt auch Drehmomentsensoren in Frage, die die an den Lagern der Achse 5 angreifenden Drehmomente bestimmen. Insbesondere bei einer Bewegung des Tiegels 1 mit dem Tiegelinhalt lassen sich so Rückschlüsse auf die im Tiegel 1 enthaltene zweite Masse des Tiegelinhalts ziehen.

Wird der Tiegel 1 mit einem Gargut und einem flüssigen Garmedium gefüllt, lässt sich der Füllstand über die Füllstandssensoren 25 spätestens dann mit Thermoelementen erkennen, wenn das Gargut und das Garmedium erhitzt wird. Die Erwärmung des Tiegelbodens 15 kann mit Hilfe der Thermoelemente 20 verfolgt werden. Die Gewichtsdifferenz zwischen dem leeren und dem gefüllten Tiegel 1 wird mit Hilfe der Masseerkennungssensoren 30 bestimmt. Die Steuerung 35 berechnet aus dem Temperaturverlauf der Thermoelemente 20 den Energieeintrag in den Tiegelinhalt. Dazu ist die Steuerung 35 mit einem Zeitgeber (nicht gezeigt) ausgestattet.

Die Informationen bezüglich des Wärmeeintrags in den Tiegelinhalt, der Masse des Tiegelinhalts über die Masseerkennungssensoren 30 und den Füllstand des Tiegelinhalts über die Füllstandssensoren 25 werden von der Steuerungseinrichtung 35 ausgewertet, um möglichst detaillierte Informationen über die Art und die Konsistenz des Tiegelinhalts zu gewinnen.

Aus diesen Informationen, insbesondere den geometrischen Abmessungen des Tiegels 1 und bedarfsweise den weiteren Informationen zu dem Tiegelinhalt, berechnet die Steuerungsvorrichtung 35, mit welcher Winkelgeschwindigkeit ω und/oder mit welcher Winkelbeschleunigung ψ der Tiegel mit Hilfe des Motors 10 um die Achse 5 gekippt werden kann, ohne dass es zu ungewünschten Bewegungen des Tiegelinhalts, wie z. B. starken Wellenbewegungen und Überschwappen, kommen kann.

Figur 2 zeigt eine andere Perspektive des Tiegels 1 nach Figur 1 für ein erfindungsgemässes Verfahren bzw. Gargerät. In dieser Ansicht ist der liquide Inhalt des Tiegels bzw. Tiegelinhalts 40 als schraffierte Fläche zu erkennen. Die Unterseite des Tiegels 1 und die daran angebrachten Thermoelemente 20 sind in Figur 2 nicht dargestellt. Dafür ist in Figur 2 dargestellt, dass die Masseerkennungssensoren 30 auf beiden Seiten der Drehachse 5 relativ zu dem Tiegel 1, um die der Tiegel 1 mit Hilfe des Motors 10 gedreht wird, angebracht sind.

Die Füllstandssensoren 25 sind in Figur 2 auf der linken Seite, also an der in Figur 2 linken Wand des Tiegels 1 zu erkennen. Alle Sensoren 25, 30 sind mit der Steuerungseinrichtung 35 verbunden. Das gleiche gilt für den Motor 10, der als Antrieb zum Kippen des Tiegels 1 um die Drehachse 5 dient.

Wird der Tiegel 1 derart um die Drehachse 5 gekippt, dass eine Drehung aus Richtung des Motors 10, also von rechts in Figur 2 auf den Tiegel 1 entgegen dem Uhrzeigersinn erfolgt, d. h. die hintere Tiegelkante, also die der Drehachse 5 gegenüberliegende Kante des Tiegels 1 nach oben bewegt wird, wird der Tiegelinhalt 40 über die vordere Kante des Tiegels 1, also auf den Betrachter der Figur 2 zu, ausgekippt. Die vordere Kante des Tiegels 1 ist dann also der Ausguss des Tiegels 1.

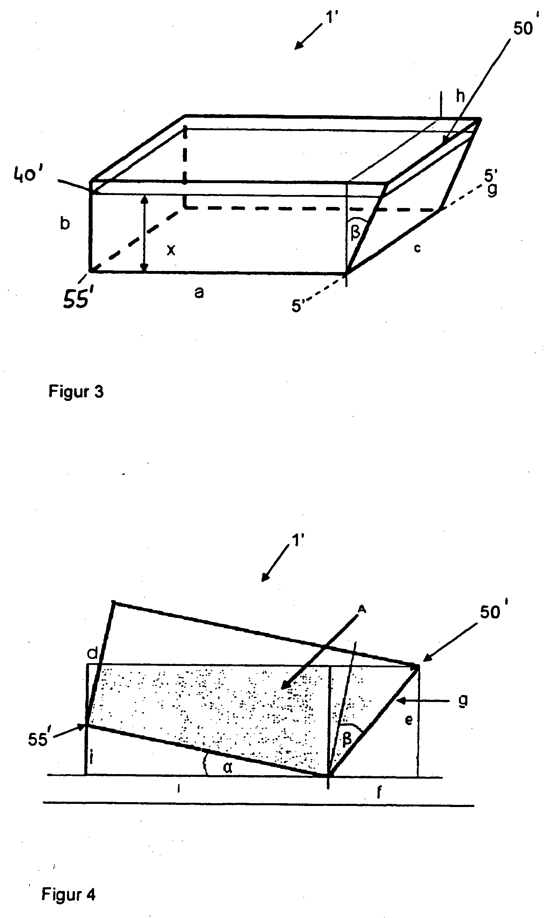

Figur 3 zeigt eine schematische, perspektivische Darstellung eines Tiegels 1' für ein Gargerät, mit dem sich ein erfindungsgemässes Verfahren durchführen lässt. Elemente des Tiegels 1', die denjenigen des Tiegels 1 entsprechen, tragen die gleichen Bezeichnung, allerdings einfach gestrichen. Bei dem Tiegel 1' dient eine rechte Oberkante 50' als Ausgusskante. Um das Ausgussverhalten eines Tiegels objektiver beschreiben zu können, werden im Folgenden Berechnungen zum Ausgiessen eines idealisierten Tiegels 1', wie er in Figur 3 dargestellt ist, vorgestellt.

Dazu wird zunächst angenommen, dass der Tiegel 1' rechteckig ist, wobei die Grundfläche des Tiegelbodens stets unverändert bleibt. Ebenfalls unverändert bleibt das Nutzvolumen V des Tiegels, welches beispielsweise einhundert Liter betragen kann. Die für die Ausgussgeometrie vorgesehene, in Figur 3 rechte Wand (der Ausguss) mit der Ausgusskante bzw. Oberkante 50' kann um ihren tiefsten Punkt, also um die Achse 5', gedreht werden. Die für den Ausguss vorgesehene rechte Wand ist um den Neigungswinkel $\beta$ geneigt. Durch das Kippen des Tiegels 1' um die Achse 5' wird die linke untere Kante 55' am Tiegelboden nach oben gekippt.

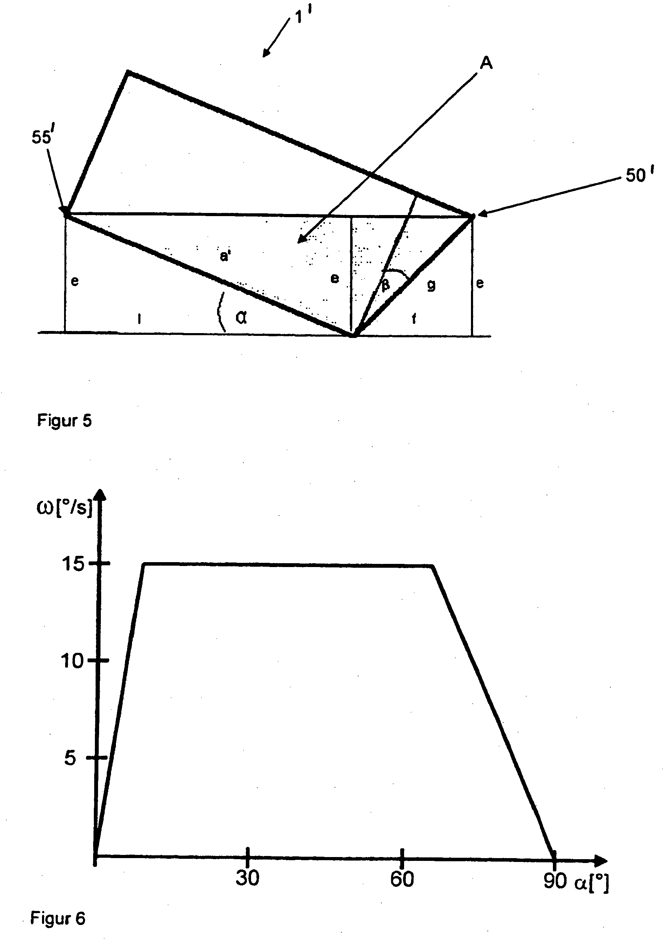

Der gleiche Tiegel 1' ist in einer Schnittansicht, jeweils nach einer Drehung um unterschiedliche Kippwinkel $\alpha$ aus einer ersten Winkelstellung in eine zweite Winkelstellung gekippt, dargestellt in den Figuren 4 und 5. Hierbei ist zu beachten, dass die erste Winkelstellung im Folgenden als eine Arbeitsposition des Tiegels festgelegt ist, bei der ein Drehwinkel um die Drehachse 5 0° beträgt. Wird der Tiegel 1' um den Kippwinkel $\alpha$ in eine zweite Winkelstellung verkippt, so entspricht gerade der Kippwinkel $\alpha$ der absoluten Winkelposition des Tiegels 1' relativ zu der Arbeitsposition.

Dabei ist:

$\alpha$ der Kippwinkel des Tiegels 1';

$\beta$ der Neigungswinkel des Ausgusses;

a die Breite des Tiegelbodens;

a' die Breite des Tiegelbodens die mit Tiegelinhalt bedeckt ist

b die Höhe des Tiegels 1';

c die Tiefe des Tiegels 1';

d die Differenz der Breite der Projektion des Tiegels 1' auf die Auflageebene, die durch die Breite a und die Tiefe c des Tiegels 1' in der ersten Winkelstellung bzw. Arbeitposition bei $\alpha = 0°$ gegeben ist; (die Arbeitsposition des Tiegels 1' ist in Figur 3 dargestellt) und der Breite des Tiegels 1' auf Höhe der Oberkante 50';

e der Abstand der Oberkante 50' zu der Auflageebene (wie bereits angeführt durch a, c in Figur 3 beschrieben);

f der Abstand einer Senkrechten zur Auflageebene über der Achse 5', um die der Tiegel 1' gekippt wird, und der Oberkante 50';

g die Länge einer Linie der geneigten Wand des Tiegels 1', die den Ausguss bildet, senkrecht auf der Achse 5' und der Oberkante 50';

h die Differenz zwischen der Breite der vorderen, bzw. hinteren Oberkante des Tiegels 1' und der Breite des Tiegelbodens a, die dadurch zustande kommt, dass der Ausguss um den Neigungswinkel $\beta$ geneigt ist;

i die Höhe der linken unteren Kante 55' über der Auflageebene (a, c nach Figur 3);

l die Breite der Projektion des Tiegelinhalts zwischen der Drehachse 5' und der linken unteren Kante 55' des Tiegels auf die Auflageebene (durch a, c in Figur 3 beschrieben);

x die Höhe des Füllstands liquiden Inhalts des Tiegels 1' in der Arbeitsposition (bei $\alpha = 0°$); und

A die Querschnittsfläche des Tiegelinhalts bei einem senkrechten Schnitt parallel zur vorderen Wand des Tiegels 1'.

Das Volumen V des Tiegelinhalts ist durch A multipliziert mit c gegeben. Aufgrund der Geometrie des Tiegels 1' gilt nach der erfindungsgemässen Erkenntnis:

$$A = \frac{V}{c} = l \cdot e - \frac{1}{2} \cdot (e - i) \cdot d - \frac{1}{2} \cdot l \cdot i + \frac{1}{2} \cdot e \cdot f \qquad \text{Gleichung (1),}$$

wobei V das Volumen des Tiegelinhalts ist.

Dabei gilt:

$$d = (e - i) \cdot \tan \alpha;$$

$$e = g \cdot \cos(\alpha + \beta);$$

$$f = g \cdot \sin(\alpha + \beta);$$

$$g = \frac{b}{\cos \beta};$$

$$h = b \cdot \tan \beta;$$

$$i = a \cdot \sin \alpha;$$

$$l = a \cdot \cos \alpha;$$

$$\beta = \arccos\left(\frac{b}{g}\right).$$

Wenn die Oberfläche des Tiegelinhalts die Kante 55' des Tiegels kreuzt, wie es in Figur 5 dargestellt ist, ändert sich aufgrund der bei einer fortgesetzten Kippbewegung nachfolgenden Reduzierung der Fläche des Bodens des Tiegels 1', die durch den Tiegelinhalt bedeckt ist, das Ausgussverhaltens des Tiegels 1' und lässt sich mit der folgenden Gleichung (2) beschreiben. Ab diesem Zeitpunkt gilt:

$$A = \frac{V}{c} = \frac{1}{2} \cdot l \cdot e + \frac{1}{2} \cdot e \cdot f \qquad \text{Gleichung (2)}$$

Dabei gilt:

$$a' \le a;$$

$$a' = \frac{e}{\sin \alpha};$$

$$e = g \cdot \cos(\alpha + \beta);$$

$$l = \frac{e}{\tan \alpha};$$

$$f = g \cdot \sin(\alpha + \beta)$$

Die Gleichung zur Bestimmung des Volumens des Tiegelinhalts V während des Ausgiessens lässt sich also auf die geometrischen Abmessungen des Tiegels a, b, c kombiniert mit g oder $\beta$ sowie den Kippwinkel $\alpha$ bei dieser Geometrie des Tiegels zurückführen. Andere Geometrien des Tiegels führen zu anderen Berechnungen und Formeln.

Der einzige Parameter, der sich während des Kippvorgangs verändert, ist der Drehwinkel des Tiegels 1' um die Drehachse 5, der hier aufgrund der Annahme einer Arbeitsposition mit einem absoluten Drehwinkel von 0° gleich dem Kippwinkel $\alpha$ ist. Der zeitliche Verlauf des Kippwinkels $\alpha$ bestimmt also den Volumenstrom des Tiegelinhalts aus dem Tiegel.

Diese Anschauungsbeispiele machen deutlich, dass es zu einer Veränderung des Volumenstroms in Abhängigkeit vom Kippwinkel $\alpha$, den Tiegelabmessungen a, b, c und der Ausgussgeometrie g, $\beta$ kommt.

Ab einem kritischen Drehwinkel des Tiegels 1' um die Drehachse 5', der einem Kippwinkel $\alpha$d entspricht, und bei dem die Oberfläche des Tiegelinhalts 40 die Kante 55' des Tiegels 1' erreicht (dargestellt in Figur 5), ändert sich das Ausgussverhalten des Tiegels 1' sprunghaft. Dieser Veränderung kann durch eine geeignete Ansteuerung der Antriebseinrichtung, mit dem der Tiegel 1' um die Achse 5' geneigt wird, insbesondere eine Reduzierung der Winkelgeschwindigkeit des Kippwinkels $\alpha$ Rechnung getragen werden. Dadurch kann vermieden werden, dass es beim Überschreiten dieses kritischen Winkels $\alpha$d, wie er sich in Figur 5 aus dem Winkel $\alpha$ ergibt, zu einer plötzlichen Veränderung des Volumenstroms, insbesondere einer Erhöhung, und dadurch beispielsweise zu einem Überschwappen des Tiegels 1' kommen kann.

Der Kippwinkel $\alpha$d, bei dem die Oberfläche des Tiegelinhalts die linke untere Ecke 55' des Tiegels 1' während des Ausgiessens erreicht, ist durch die folgende Gleichung beschrieben:

$$a \cdot \sin(\alpha) = g \cdot \cos(\alpha + \beta) = g \cdot \cos(\alpha) \cdot \cos(\beta) - g \cdot \sin(\alpha) \cdot \sin(\beta) \quad \Rightarrow$$

$$\frac{\cos(\alpha)}{\sin(\alpha)} = \cot(\alpha) = \frac{a}{g \cdot \cos(\beta)} + \frac{\sin(\beta)}{\cos(\beta)} = \frac{a}{g \cdot \cos(\beta)} + \tan(\beta) \quad \Rightarrow$$

$$\alpha = arc\cot\left(\frac{a}{g \cdot \cos(\beta)} + \tan(\beta)\right) := \alpha_1$$

Ab diesem kritischen Winkel $\alpha$d des Kippwinkels $\alpha$ ändert sich also das Ausgussverhalten sprunghaft. Demzufolge muss die Bewegung des Tiegels 1' angepasst werden, wenn ein konstanter Volumenstrom erreicht werden soll. Kurz vorher und kurz danach kann die Winkelgeschwindigkeit $\omega$ und/oder die Winkelbeschleunigung $\psi$ des Tiegels 1' um die Achse 5' bereits angepasst werden, um einen möglichst stetigen Übergang beim Durchlaufen des Winkels $\alpha$d zu erreichen. Als Beispiel sei hier ein Bereich von $\alpha$d+3° bis $\alpha$d-5° genannt. Um welches Mass und ab welchem Bereich um $\alpha$d herum die Winkelgeschwindigkeit $\omega$ und/oder die Winkelbeschleunigung $\psi$ angepasst werden müssen, hängt von der Trägheit des Systems Tiegel 1' und Tiegelinhalt, der Leistung der Antriebseinrichtung und von der Konsistenz des Tiegelinhalts ab. Je grösser die Masse des Tiegels 1' und des Tiegelinhalts ist, desto früher muss die Winkelgeschwindigkeit $\psi$ des Tiegels 1' angepasst werden.

Der Tiegelinhalt beginnt aus dem Tiegel heraus zu fliessen, wenn der Tiegel so weit geneigt ist, d. h. wenn der Kippwinkel $\alpha$ erreicht ist, bei dem das ursprüngliche Volumen des Tiegelinhalts gleich dem Volumen V nach Gleichung (1) ist. Dieser Winkel wird im Folgenden als Ausgusswinkel $\alpha$A bezeichnet und kann durch die Gleichungen (3) bestimmt werden.

$$V = c \cdot \left( l \cdot e - \frac{1}{2} \cdot (e - i) \cdot d - \frac{1}{2} \cdot l \cdot i + \frac{1}{2} \cdot e \cdot f \right) = c \cdot \left( a \cdot x + \frac{1}{2} \cdot \tan \beta \cdot x^2 \right) \Rightarrow$$

$$a \cdot g \cdot \cos \alpha_A \cos(\alpha_A + \beta) - \frac{1}{2} g^2 \cdot (\cos(\alpha_A + \beta))^2 \cdot \tan \alpha_A + a \cdot g \cdot \cos(\alpha_A + \beta) \cdot \sin \alpha_A \cdot \tan \alpha_A$$

$$- \frac{1}{2} a^2 \cdot (\sin \alpha_A)^2 \cdot \tan \alpha_A - \frac{1}{2} a^2 \sin \alpha_A \cdot \cos \alpha_A + \frac{1}{2} g^2 \sin(\alpha_A + \beta) \cdot \cos(\alpha_A + \beta) = a \cdot x + \frac{1}{2} \tan \beta \cdot x^2$$

Aus der Höhe des Füllstands x, der Breite des Tiegelbodens a, der Länge des Ausgusses g und dem Neigungswinkel des Ausgusses $\beta$ kann also der Ausgusswinkel $\alpha A$ errechnet werden. Für jede Erhöhung des Kippwinkels $\alpha$ über den Ausgusswinkel $\alpha A$ wird ein Volumenstrom aus dem Tiegel fliessen.

Alle in den Ausführungsbeispielen, d. h. alle bisher angegebenen Gleichungen, können auch als mathematische Näherungslösungen für ähnliche Tiegelgeometrien verwendet werden. Die angegebenen Formeln sind also in gewissem Umfang von den konkreten Ausführungsbeispielen unabhängig. D. h. für Tiegel mit grob rechteckiger Grundform und einem geneigten Ausguss können diese Formeln angewendet werden, auch wenn sie keine exakte Lösung der tatsächlichen mathematischen Beschreibung der Tiegel- und/oder Ausgussgeometrie darstellen. Der Ausguss kann beispielsweise nur einen Teil einer Seitenwand einnehmen. Auch ist es möglich empirisch bestimmte Korrekturfaktoren in die angegebenen Gleichungen einfliessen zu lassen, um die Gleichungen zur Beschreibung der realen Tiegel- und Ausgussgeometrie anzupassen.

Das aus dem Tiegel fliessende Volumen ergibt sich aus der Zeitabhängigkeit des Kippwinkels $\alpha$. Für jedes Erhöhen des Kippwinkels $\alpha$ über den Ausgusswinkel $\alpha A$ hinaus gilt also, dass sich das ausfliessende Volumen Tiegelinhalts pro Winkelgrad Kippwinkel $\alpha$ aus der Differenz der Volumina nach Gleichung (1) oder (2) für eine Kippwinkeldifferenz [Delta]$\alpha$ von 1° berechnet. Bei einer gleichmässigen Winkelgeschwindigkeit $\omega$ von beispielsweise 1° pro Sekunde ergibt sich daraus das ausfliessende Volumen Tiegelinhalts pro Sekunde, also der Volumenstrom des Tiegelinhalts aus dem Tiegel heraus.

Ändert sich der Kippwinkel $\alpha$, die Winkelgeschwindigkeit $\omega$ oder die Winkelbeschleunigung $\psi$ über die Zeit, können einfach die Ableitungen des Kippwinkels $\alpha$ nach der Zeit bestimmt und daraus der Volumenstrom des Tiegelinhalts berechnet werden. Dabei gilt:

$$\omega = \frac{d\alpha}{dt};$$

$$\psi = \frac{d\omega}{dt} = \frac{d^2\alpha}{dt^2}$$

Durch die differenzielle Berechnung der Winkelgeschwindigkeit $\omega$ nach den Gleichungen (1) oder (2) kann der Volumenstrom berechnet werden. Bei einer experimentellen Bestimmung des Volumenstroms wird die Winkelgeschwindigkeit $\omega$ und damit der Volumenstrom des Tiegelinhalts durch einen Differenzenquotienten bestimmt.

Ein Verlauf für die Winkelgeschwindigkeit $\omega$ des Kippwinkels $\alpha$ in Abhängigkeit der Winkelstellung des Tiegels 1', der gerade dem der Kippwinkel $\alpha$ entspricht, ist in einem Diagramm in Figur 6 dargestellt. Hierbei erfolgt eine Bewegung des Tiegels 1' von der ersten Winkelstellung, die der Arbeitsposition entspricht, in eine zweite Winkelstellung, die einer maximalen Kippung des Tiegels 1' entspricht. Die Winkelgeschwindigkeit $\omega$ der Drehung um die Drehachse 5' des Tiegels 1' wird zunächst kontinuierlich von 0° pro Sekunde auf 15° pro Sekunde bis zu einem Kippwinkel $\alpha$ von knapp 10° erhöht. Anschliessend wird bis zum einem Kippwinkel $\alpha$ von 65° die Winkelgeschwindigkeit $\omega$ bei 15° pro Sekunde belassen. Ab einem Kippwinkel $\alpha$ von 65° wird bis zum Kippwinkel von 90°, d. h. dem völligen Entleeren des Tiegel, die Winkelgeschwindigkeit $\omega$ von 15° pro Sekunde auf 0° pro Sekunde abgebremst.

Dieses Beispiel für ein Auskippen des Tiegels wäre beispielsweise für einen leeren Tiegel geeignet, der komplett gekippt werden soll. Der Tiegel befindet sich, wie zuvor beschrieben, zunächst in einer Arbeitsposition, d. h. der Kippwinkel $\alpha$ beträgt zunächst 0°. Der Füllstand im Tiegel ist ebenso bekannt, wie die Masse des Tiegelinhalts und die Tiegelabmessungen inklusive der Ausgussgeometrie.

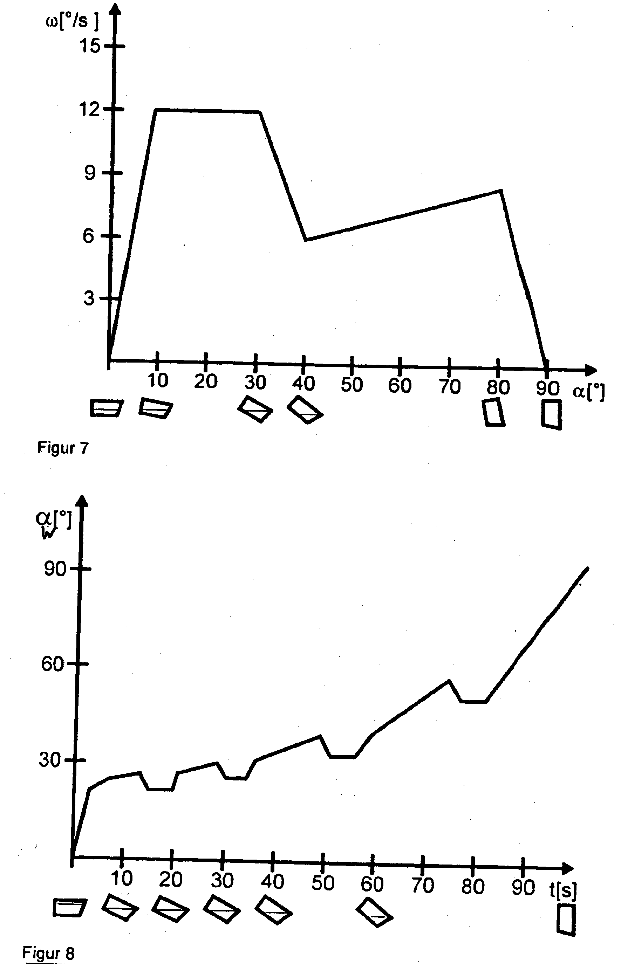

Die Diagramme nach Figur 6 und den folgenden Figuren 7 und 8 sind so zu verstehen, dass SollWerte für die Winkelgeschwindigkeit ω und den Kippwinkel α aufgetragen sind. Die IstWerte des Kippwinkels α können je nach Trägheit des Systems Tiegel und Tiegelinhalt und je nach Leistung der Antriebseinrichtung zum Kippen des Tiegels abweichen.

Ein weiteres Ausführungsbeispiel, bei dem das Verfahren anhand eines Kippvorgangs erläutert wird, ist in Figur 7 dargestellt. Dort ist in einem Diagramm die Winkelgeschwindigkeit ω gegen den Kippwinkel α des Tiegels aufgetragen. Bei dem dargestellten Beispiel wird beispielsweise heisses Frittieröl aus dem Tiegel gekippt.

Der Tiegel befindet sich zunächst in einer Arbeitsposition, d. h. die erste Winkelstellung entspricht einem absoluten Kippwinkel von 0° und somit gilt, dass der Kippwinkel α ebenfalls zunächst 0° beträgt. Der Füllstand im Tiegel und/oder die Massen des Tiegels und des Tiegelinhalts sind bekannt. Die Tiegelabmessungen sind ebenso bekannt, wie die Ausgussgeometrie.

Beispielsweise ist durch die Einstellung der Betriebsart "Frittieren" Frittieröl als Tiegelinhalt bekannt. Durch Messung ist auch die Temperatur des Tiegelinhalts bekannt.

Figur 7 zeigt hierzu ein Diagramm, in dem ein Verlauf der Winkelgeschwindigkeit ω des Kippwinkels α in Abhängigkeit von der Winkelstellung, die gerade dem Kippwinkel α entspricht, wie er sich aus einem erfindungsgemässen Verfahren ergibt, dargestellt ist. Für die Kippwinkel 0°, 10°, 30°, 40°, 80° und 90° sind unterhalb der Beschriftung der Abszisse kleine schematische Tiegel, teilweise mit Füllung, um die jeweiligen Kippwinkeln α gekippt, gezeigt. Die schematischen Tiegel sind ähnlich dem in den Figuren 3, 4 und 5 dargestellten Tiegel 1'.

Zu Beginn des Kippvorgangs wird die Winkelgeschwindigkeit ω möglichst schnell erhöht. Bis zu einem Kippwinkel α von circa 9° wird der Tiegel mit maximaler Winkelbeschleunigung ψ bis zu einer maximalen Winkelgeschwindigkeit ω von 12° pro Sekunde beschleunigt. Diese maximale Winkelgeschwindigkeit ω von 12° pro Sekunde wird bis zum Erreichen eines Kippwinkels α von 30° beibehalten. Aufgrund der geringen Füllhöhe des Inhalts wird bei dieser Bewegung der kritische Winkel αd durchfahren, bevor der Ausgusswinkel αA erreicht ist. Dies zeigt, dass eine Anpassung der Kippbewegung vor Erreichen des kritischen Winkels αd insbesondere dann erfolgt, wenn der Ausgusswinkel $\alpha_A$ bei einer Kippbewegung aus der Arbeitsposition vor dem kritischen Winkel $\alpha_d$ erreicht ist, also bei Erreichen des kritischen Winkels bereits ein Ausgiessen erfolgt. Ab diesem Kippwinkel wird ab einer Winkelposition von 10° vor Erreichen des Ausgusswinkels (40°) die Winkelgeschwindigkeit ω kontinuierlich reduziert, bis eine Winkelgeschwindigkeit ω von 6° pro Sekunde erreicht wird.

Die Steuerung des Gargeräts, insbesondere die Regel- und/oder Steuereinrichtung, berechnet aus der Geometrie des Tiegels und des Ausgusses sowie der Höhe des Füllstands und dem Kippwinkel α, bei dem der Tiegelinhalt beim Kippen des Tiegels über die Ausgussgeometrie auszutreten beginnt, also den Ausgusswinkel $\alpha_A$, wie beispielsweise in Figur 4 dargestellt.

Bei der Berechnung des Ausgusswinkels $\alpha_A$ kann bei passender Geometrie des Tiegels auf die Gleichungen zu Figur 5 (Gleichung (3)) zurückgegriffen werden oder der Ausgusswinkel $\alpha_A$ wird für verschiedene Füllstände empirisch bestimmt. Bereits 10° vor Erreichen des Ausgusswinkels $\alpha_A$, im Beispiel nach Figur 7 sei der Ausgusswinkel $\alpha_A$ bei einem Kippwinkel α von 40° erreicht, also beispielsweise bei einem Kippwinkel von 30°, wird die Winkelgeschwindigkeit ω des Tiegels kontinuierlich bis zum Erreichen des Ausgusswinkels $\alpha_A$ bei 40° reduziert. Beim Erreichen des Ausgusswinkels $\alpha_A$ beträgt die Winkelgeschwindigkeit ω nur noch 6° pro Sekunde. Beim anschliessenden Ausgiessen des Tiegels wird die Winkelgeschwindigkeit ω von 6° pro Sekunde kontinuierlich auf 9° pro Sekunde erhöht. Die Winkelgeschwindigkeit ω von 9° pro Sekunde wird bei einem Kippwinkel α von 80° erreicht. Anschliessend wird der Tiegel für die letzten 10° bis zum maximalen Kippwinkel (hier 90°) mit einer maximalen negativen Winkelbeschleunigung ψ, also mit maximaler Abbremsrate abgebremst. Schliesslich kommt der Tiegel bei einem Kippwinkel α von 90° zum Stehen.

Durch diese Bewegung des Tiegels ist ein sicheres Ausgiessen aus dem Tiegel möglich und es findet ein kontinuierlicher Ausfluss des maximal möglichen Volumens in kürzest möglicher Zeit statt.

Figur 8 zeigt ein Diagramm, in dem die Winkelstellung $\alpha_w$ über die Zeit für eine andere Bewegung des Tiegels, die aus einem erfindungsgemässen Verfahren resultiert, aufgetragen ist. Ziel ist es hierbei, den Volumenstrom des Tiegelinhalts einerseits konstant zu halten und andererseits den Tiegelinhalt beim Ausgiessen in fünf Portionen aufzuteilen. Durch die Bestimmung des Volumenstroms kann also auch eine Dosierbarkeit des Tiegelinhalts erreicht werden.

Der Anwender kann also beispielsweise ein bestimmtes Volumen auswählen, wobei das Gargerät den Kippvorgang automatisch stoppt, wenn das entsprechende Volumen aus dem Tiegel entleert wurde. Dies ist beispielsweise dann sinnvoll, wenn mehrere Behälter mit einem bestimmten Volumen befüllt werden müssen oder nur eine maximale Befüllmenge der Behälter möglich ist, die geringer als die Füllmenge des Tiegelinhalts ist.

So kann beispielsweise Pudding aus einem Tiegel mit 150 Litern Nutzfüllmenge, der mit 100 Liter Pudding befüllt ist, in Portionen zu je 20 Litern abgefüllt werden. Für die Bewegung des Tiegels, d. h. die Abhängigkeit des Kippwinkels α von der Zeit, ergibt sich dann, dass die Abfüllung in fünf-20-Liter-Schritte unterteilt ist.

Zunächst wird der gefüllte Tiegel, ausgehend von einer ersten Winkelstellung, die der Arbeitsposition entspricht, in eine zweite Winkelstellung, bei der gerade die gewünschte Menge an Inhalt ausgegossen ist, bewegt. Diese Bewegung erfolgt zunächst bei maximaler Winkelgeschwindigkeit ω bis kurz vor Erreichen des Ausgusswinkels $\alpha_A$ und zwar bis zu einer Winkelstellung von 26°. Nach drei Sekunden wird der Soll-Wert für die Winkelgeschwindigkeit ω reduziert, um ein Überschwappen des Tiegelinhalts zu verhindern. Bei Erreichen des Ausgusswinkels von 27°, nach acht Sekunden, wird der Soll-Wert für die Winkelgeschwindigkeit ω ein weiteres Mal reduziert, um ein kontinuierliches Ausgiessen aus dem Tiegel zu ermöglichen. Aufgrund des bekannten Füllstands der bekannten Dichte und/oder Viskosität des Tiegelinhalts und der bekannten Geometrie des Tiegels und des Ausgusses des Tiegels kann die Steuerungseinrichtung des Gargeräts, das aus dem Tiegel ausgekippte Volumen des Tiegelinhalts berechnen.

Alternativ dazu kann die Menge des ausgeleerten Tiegelinhalts auch durch Messen einer Gewichtsdifferenz bestimmt werden, oder die Füllstandshöhe im Tiegel kontinuierlich gemessen werden. Nach 13 Sekunden und bei Erreichen der zweiten Winkelstellung von 28° ist die erste 20-Liter-Portion aus dem Tiegel entleert. Der Tiegel wird anschliessend auf eine Winkelstellung von 25° zurückgedreht, also ein negativer Kippwinkel α gewählt. Danach verharrt der Tiegel für  fünf Sekunden bei einer Kippwinkelposition von 25°, um die Bewegung des Tiegelinhalts im Tiegel abklingen zu lassen. Zusätzlich soll diese Zeit dem Anwender des Gargeräts ermöglichen, das nächste leere Gefäss, in das der Tiegelinhalt gefüllt werden soll, zu holen und unter dem Ausguss des Tiegels zu positionieren. Diese Winkelstellung von 25° stellt eine neue erste Winkelstellung dar und ausgehend von dieser wird ein neuer Ausgusswinkel $\alpha_A$, der kritische Winkel $\alpha_d$ und eine neue zweite Winkelstellung berechnet. Dann wird der Tiegel wieder mit gesteigerter Winkelgeschwindigkeit ω bis zu einer Winkelstellung von 28° gekippt und anschliessend die zweite Portion durch langsames Kippen des Tiegels bis zu der neuen zweiten Winkelstellung von 31° nach 28 Sekunden aus dem Tiegel ausgeleert. Anschliessend wird die Winkelstellung wieder auf 28° reduziert und dort für circa fünf Sekunden gehalten.

Ebenso ist es möglich, dass der Tiegel in dieser Ruheposition verharrt, bis der Anwender eine Eingabe an einer Eingabeeinrichtung des Gargeräts tätigt, die dazu führt, dass der nächste Kippvorgang gestartet wird. Nach einer Zeit von 35 Sekunden betätigt im vorliegenden Beispiel der Anwender des Gargeräts die Eingabeeinrichtung des Gargeräts indem er z. B. auf einer Eingabeeinrichtung, insbesondere einem Touchscreen, eine Taste mit der Beschriftung "nächste Ladung", "dritte Ladung" oder "dritte von fünf Ladungen" aktiviert. Nach Betätigen der Taste wird die Kippung des Tiegels ausgehend von der neuen ersten Winkeleinstellung von 28° in eine neue zweite Winkelstellung 40°, bis zu der die vorgegebene Menge an Tiegelinhalt ausgegossen ist, bestimmt, und der Tiegel zunächst mit grosser Winkelgeschwindigkeit ω bis zu einer Winkelstellung $\alpha_w$ von 31° gekippt. Ab diesem Moment beginnt wieder Tiegelinhalt aus dem Tiegel auszuströmen. Der Tiegel wird dann langsamer bis zum Erreichen einer Winkelstellung $\alpha_w$ von 40° gekippt.

Die grössere Kippwinkeldifferenz bei der dritten Ladung resultiert daraus, dass bei der Bewegung der kritische Winkel $\alpha_d$ überschritten wird, und zwar gleichzeitig mit Erreichen des Ausgusswinkels $\alpha_A$ für diese Ladung, und sich so aufgrund der Geometrie des Tiegels das ausgeleerte Volumen pro Grad Kippwinkel α mit steigendem Kippwinkel α reduziert. Dementsprechend wird die dritte Ladung über einen grösseren Kippwinkelbereich α ausgekippt. In diesem Fall wird also gerade der kritische Winkel $\alpha_d$ gleichzeitig mit Erreichen des Ausgusswinkels $\alpha_A$ erreicht. Wäre dies nicht der Fall, würde, wie bereits anhand der Figur 7 beschrieben, die Winkelgeschwindigkeit sowohl vor Erreichen des Ausgusswinkels $\alpha_A$ reduziert, um ein Überschiessen des Tiegelinhalts aus dem Tiegel und somit ein Überschwappen zu vermeiden und auch eine Anpassung der Winkelgeschwindigkeit durch Erhöhung oder Reduzierung, je nach Tiegelgeometrie, bei Erreichen des kritischen Winkels vorgenommen, um eine schlagartige Erhöhung bzw. Reduzierung des Ausgussvolumens zu vermeiden, um ein kontinuierliches, grösstmögliches Ausgussvolumen zu erreichen.

Das nachfolgende Auskippen über einen längeren Zeitraum kann aufgrund der Tiegelgeometrie notwendig sein. Das Auskippen der vierten Ladung zwischen 56 Sekunden und 74 Sekunden wird zudem mit einer höheren Winkelgeschwindigkeit ω durchgeführt. Für die letzte Ladung kann die grösste Winkelgeschwindigkeit verwendet werden. Der Tiegel ist schon vor Erreichen einer Winkelstellung von 90°, abhängig von der Neigung β des Ausflusses, vollständig entleert.

Die in der vorstehenden Beschreibung, den Ansprüchen und den Zeichnungen offenbarten Merkmale können sowohl einzeln, als auch in jeder beliebigen Kombination für die Verwirklichung der Erfindung in ihren verschiedenen Ausgestaltungen von Bedeutung sein.

**Bezugszeichenliste**

| | |
|---|---|
| 1, 1' | Tiegel |
| 5, 5' | Drehachse |
| 10 | Motor |
| 15 | Tiegelboden |
| 20 | Thermoelement |
| 25 | Sensor |
| 30 | Masseerkennungssensor |
| 35 | Steuerungseinrichtung |
| 40, 40' | Tiegelinhalt |

| 50' | Oberkante |
|---|---|
| 55' | Kante |
| $\alpha$: | Kippwinkel |
| $\beta$: | Neigungswinkel |
| a | Breite |
| a' | Breite |
| b | Höhe |
| c | Tiefe |
| d | Differenz |
| e | Abstand |
| f | Abstand |
| g | Abstand |
| h | Abstand |
| i | Höhe |
| l | Breite |
| x | Höhe |
| A | Querschnittsfläche |
| $\alpha_d$ | kritischer Drehwinkel |
| $\alpha_A$ | Ausgusswinkel |
| $\alpha_w$ | Winkelstellung |

**Patentansprüche**

1. Verfahren zum Steuern oder Regeln der Bewegung eines kippbaren Tiegels eines Gargeräts bei einem Ausgießvorgang eines Tiegelinhalts durch Berechnung von Steuerungsdaten für einen Kippvorgang,
**dadurch gekennzeichnet, dass**
als Parameter eine Tiegelgeometrie unter Heranziehung einer Fließeigenschaft des Tiegelinhalts und/oder eines Tiegelfüllstandes bei der Berechnung der Steuerungsdaten für den Kippvorgang des Tiegels berücksichtigt werden, und
eine Antriebseinrichtung, mit der der Tiegel von einer ersten Winkelstellung um einen Kippwinkel in eine zweite Winkelstellung gekippt wird, auf der Grundlage der Steuerungsdaten geregelt wird, wobei
eine Winkelstellungsveränderung zusätzlich zum Kippwinkel die Vorgabe einer Winkelgeschwindigkeit und/oder einer Winkelbeschleunigung zur Steuerung der Bewegung des Tiegels umfasst.

2. Verfahren nach Anspruch 1, **dadurch gekennzeichnet, dass** zum Dosieren des Tiegelinhalts ein Volumenstrom beim Kippvorgang bestimmt wird, wobei
vorzugsweise beim Ausgießvorgang der Volumenstrom konstant gehalten wird.

3. Verfahren nach Anspruch 1 oder 2, **dadurch gekennzeichnet, dass** der Tiegel mittels zumindest einer Antriebseinrichtung aus einer ersten Winkelstellung um einen Kippwinkel in eine zweite Winkelstellung gekippt wird, wobei die erste und zweite Winkelstellung von zumindest einer Regel- und/oder Steuerungseinrichtung des Gargeräts eingestellt wird und/oder die Bewegung des Tiegels durch die Abhängigkeit des Kippwinkels des Tiegels von der Zeit bestimmt wird.

4. Verfahren nach Anspruch 3, **dadurch gekennzeichnet, dass** der mit Tiegelinhalt gefüllte Tiegel, ausgehend von einer ersten Winkelstellung des Tiegels, die einer Arbeitsposition entspricht, in eine zweite Winkelstellung, bei der gerade die gewünschte Menge an Tiegelinhalt ausgegossen ist, bewegt wird, wobei das aus dem Tiegel ausgekippte Volumen berechnet wird von einer Steuerungseinrichtung des Gargeräts in Kenntnis des Tiegelfüllstands, der Tiegelinhaltsdichte und/oder der Tiegelinhaltsviskosität und der Geometrie des Tiegels sowie des Ausgusses des Tiegels.

5. Verfahren nach Anspruch 2 oder 3, **dadurch gekennzeichnet, dass** die Menge an ausgeleertem Tiegelinhalt durch Messen einer Gewichtsdifferenz oder kontinuierliches Messen der Füllstandshöhe im Tiegel bestimmte wird.

6. Verfahren nach einem der Ansprüche 2 bis 5, **dadurch gekennzeichnet, dass** der Tiegel in einer Ruheposition verharrt, bis ein Anwender eine Eingabe an einer Eingabeeinrichtung des Gargeräts tätigt, die dazu führt, dass ein nächster Kippvorgang gestartet wird.

**EP 2 471 419 B1**

**Claims**

1. A method for controlling or regulating the movement of a tiltable pan of a cooking appliance during a pouring procedure of the contents of the pan by calculating control data for a tilting procedure, **characterized in that** a pan geometry, with reference to a flow characteristic of the contents of the pan and/or a pan filling level, is taken into account as a parameter during the calculation of the control data for the pan tilting procedure, and a drive means, with which the pan is tilted from a first angular position about a tilt angle into a second angular position, is regulated on the basis of the control data, wherein a change in the angular position, in addition to the tilt angle, comprises the specification of an angular speed and/or an angular acceleration in order to control the movement of the pan.

2. The method according to Claim 1, **characterized in that** in order to measure out the contents of the pan, a volume flow rate is determined during the tilting procedure, with the volume flow rate preferably being kept constant during the pouring procedure.

3. The method according to Claim 1 or 2, **characterized in that** the pan is tilted by means of at least one drive means from a first angular position about a tilt angle into a second angular position, wherein the first and second angular positions are adjusted by at least one regulating and/or control device of the cooking appliance and/or the movement of the pan is determined by the dependency of the tilt angle of the pan on time.

4. The method according to Claim 3, **characterized in that** the pan filled with the pan contents, starting from a first angular position of the pan, which corresponds to a working position, is moved into a second angular position, at which the desired quantity of the contents of the pan is precisely poured out, whereby the volume tipped out of the pan is calculated by a control device of the cooking appliance, which knows the filling level of the pan, the density of the contents of the pan and/or the viscosity of the contents of the pan and the geometry of the pan and the pouring spout of the pan.

5. The method according to Claim 2 or 3, **characterized in that** the amount of the contents of the pan emptied out is determined by measuring a difference in weight or continuously measuring the filling level in the pan.

6. The method according to any one of Claims 2 to 5, **characterized in that** the pan remains in a rest position until a user makes an input on an input device of the cooking appliance, which causes the next tilting procedure to start.

**Revendications**

1. Procédé de commande ou régulation du mouvement d'une casserole basculable d'un appareil de cuisson lors d'une opération de versement du contenu de casserole grâce à un calcul de données de commande pour une opération de basculement **caractérisé en ce que** une géométrie de casserole avec prise en compte d'une propriété d'écoulement du contenu de casserole et/ou d'un état de remplissage de casserole est prise en compte en tant que paramètre lors du calcul des données de commande pour l'opération de basculement de la casserole, et un dispositif d'entraînement, avec lequel la casserole est basculée d'une première position angulaire dans une seconde position angulaire selon un angle de basculement, est régulé sur la base des données de commande, une modification de position angulaire comprend, en plus de l'angle de basculement, la spécification d'une vitesse angulaire et/ou d'une accélération angulaire destinée à la commande du mouvement de la casserole.

2. Procédé selon la revendication 1, **caractérisé en ce que** en vue d'un dosage du contenu de casserole, un débit est déterminé lors de l'opération de basculement, le débit étant de préférence maintenu constant lors de l'opération de versage.

3. Procédé selon la revendication 1 ou 2, **caractérisé en ce que** la casserole est basculée au moyen d'au moins un dispositif d'entraînement d'une première position angulaire dans une seconde position angulaire selon un angle de basculement, les première et seconde positions angulaires étant ajustées par au moins un dispositif de régulation et/ou commande de l'appareil de cuisson et/ou

le mouvement de la casserole étant déterminé par la dépendance temporelle de l'angle de basculement de la casserole.

4. Procédé selon la revendication 3, **caractérisé en ce que**
la casserole remplie du contenu de casserole est déplacée à partir d'une première position angulaire de la casserole, correspondant à une position de travail, jusque dans une seconde position angulaire, dans laquelle la quantité souhaitée de contenu de casserole est versée, le volume déversé hors de la casserole étant calculé par un dispositif de commande de l'appareil de cuisson, en connaissance de l'état de remplissage de casserole, de la densité du contenu de casserole et/ou de la viscosité du contenu de casserole et de la géométrie de la casserole ainsi que celle du bec verseur de la casserole.

5. Procédé selon la revendication 2 ou 3, **caractérisé en ce que**
la quantité de contenu de casserole déversée est déterminée par mesure d'une différence de poids ou par mesure en continu de la hauteur du niveau de remplissage dans la casserole.

6. Procédé selon l'une quelconque des revendications 2 à 5, **caractérisé en ce que**
la casserole reste dans une position de repos jusqu'à ce qu'un utilisateur effectue une entrée au niveau d'un dispositif d'entrée de l'appareil de cuisson, ladite entrée entraînant le démarrage de la prochaine opération de basculement.

Figur 1

Figur 2

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3744475 A
- EP 1488721 A1